# EUROPEAN PATENT APPLICATION

(11) **EP 3 614 323 A1**
(43) Date of publication of application: **26.02.2020**
(21) Application number: 18189766.1
(22) Date of filing: 20.08.2018
(51) Int. Cl.: G06Q 10/10, G06F 17/30

(54) **APPARATUS AND METHOD FOR SHARING DATA IN A VALUE CHAIN COLLABORATION PROCESS**

(71) Applicant: Nallian NV, 3140 Keerbergen (BE)
(72) Inventor: Verheyen, Jean, 3140 Keerbergen (BE)
(74) Representative: IP HILLS NV

(57) **Abstract**

According to an embodiment, the invention relates to a computer implemented method for sharing data between nodes (100-107) in a value chain collaboration process, the method comprising the steps of requesting (500) access by a first node (106) to a data catalog (310); and publishing (501) in the data catalog (310) by the first node (106) a data set (410) comprising datums (411-416) annotated by a respective set of rules; and when a second node (405) requests (502) access to the data catalog (310) revealing (506) to the second node (405) one or more datums (411-416) annotated with a rule matching (504) an identification of the second node (405).

## Description

### Field of the Invention

The present invention generally relates to a method, system and computer program product for sharing data between nodes in a value chain collaboration process.

### Background of the Invention

A value chain collaboration process, VCCP, comprises the organization of a flow of resources between different points or nodes, like a node of origin and a node of consumption, or a node of transformation. Resources comprise tangible goods, like products, as well as intangible goods, like data. A VCCP is thus a process of planning, implementing and controlling procedures for efficiently and effectively stocking, securing, transforming, transporting and delivering resources between nodes.

In a VCCP end-to-end operations are rarely offered by a single party. Therefore, a multitude of parties, a variety of operations, services and activities, and distinct nodes are involved, whereby, commonly, a party is only responsible for a part of a chain in the VCCP, which links one node to another one. A party, or more parties grouped in a node, will thus cooperate or collaborate with other nodes, represented by another party or parties, to let operate the process. To implement a collaboration, parties will then, for example via the nodes, exchange data through a connection, each for their proper node for which they are responsible, resulting in a complex network of interconnected nodes, each representing one or more parties.

Through a connection, basic information may be exchanged, such as, for example, a simple confirmation when transferring a package, to more complex exchanges, such as a payment confirmation comprising a secured identification of both parties when the transfer takes place.

To operate the VCCP, data to at least some extent needs to be exchanged, that is, parties are forced to exchange data with each other. However, this is a problem for several reasons. Firstly, parties may not know each other, especially in long value chains or parties involved in subcontracting or delegation roles with other nodes, meaning that a party initially does not know with whom data needs to be exchanged. Secondly, even if they know each other, they may not have confidence in each other. One party, or both of them, may thus be reluctant to exchange data. Thirdly, even if they are prepared to exchange data, each party may have its personal interest to which extent data is exchanged. Because of this, each party will be reluctant to share data, while at the same time the shared data needs to meet certain requirements.

In US7577622B1 a system and related method is disclosed wherein parties, such as carriers and shippers in the transport of goods, may share data through a connection between nodes, whereby the connection between them is created by a system administrator. For each connection, a data set is defined and divided into either private or shareable data, such that parties may decide which data between nodes is shared and which is kept private.

A drawback is that both parties need to agree on a third party, i.e. the system administrator, establishing the connection such that nodes may cooperate with each other. Furthermore, another drawback is that one party may define data as private, while at the same time the other party considers it as essential for the process, thus data that needs to be shared to implement the VCCP. A third drawback is that this results in a complex network of interconnected nodes, because each time a party wants to cooperate or collaborate with another new party through a set of nodes, a new connection has to be established between the nodes.

### Summary of the Invention

There is thus a need for a method and related system to share data between parties or nodes operating in a VCCP in a more efficient way. It is therefore an object of the present disclosure to alleviate the above drawbacks and to provide an improved solution for sharing data between nodes in a VCCP.

This object is achieved, in a first aspect, by computer implemented method for sharing data between nodes in a value chain collaboration process, the method comprising the steps of:
- requesting access by a first node to a data catalog; and
- publishing in the data catalog by the first node a data set comprising datums annotated by a respective set of rules; and
when a second node requests access to the data catalog:
- revealing to the second node one or more datums annotated with a rule matching an identification of the second node.

A node may be regarded as a party in the VCCP, or as a group of parties collaborating and located on a distinct location, for example at a harbour, an airport or a business park. To the outside, a node is thus regarded as an entity offering one or more services in a VCCP to which a user may direct a request. The node is then responsible for a part of the chain in the VCCP.

In the VCCP, different nodes, each responsible for a part thereof, may thus cooperate and/or collaborate with each other. For this cooperation or collaboration data needs to be shared.

First, a first node request access to a data catalog. When requesting access to the data catalog, the first node is granted access to the data catalog through an authorization process which registers the identify of the first node to the catalog. The identity of the first node may be provided as an identification number, a name and/or any other parameter suitable to identify the node, or a more comprehensive profile describing the first node.

Next, the first node publishes a data set in a data catalog, the data set related to the part of the chain for which the node is responsible. It should be further understood that, even if a node is only responsible for a part of the chain, that a data set may comprise data related to endpoints of a complete chain, since, although since only responsible for a part, a requirement may be that the data set relates to the complete chain to be able to perform an operation.

The data set comprises datums, wherein a datum is regarded as a single item of data in the data set. Differently formulated, a datum comprises a value or values of qualitative and/or quantitative variables from which information may be derived. The data set comprises a group of datums, thus a group of values.

It should be appreciated that the data catalog is suitable for receiving a data set from a node that publishes the data set, and that the data catalog is configured to store the related datums. The data catalog may thus comprise, for example, a structure wherein the datums may be stored in a logical manner, or any other manner suitable for receiving and storing a data set. Alternatively, a node may also publish a data set in the data catalog by linking the data set and related datums to the data catalog without storing it. Consequently, the data remains at the source, thus at the node, and may be retrieved on demand.

The datums of the data set are published in the data catalog. Within the data catalog and/or through the data set, a datum may further be linked to a respective definition and/or to meta data, such that a value or values of the qualitative and/or quantitative variables may be given a specific meaning linked to the definition and/or meta data. A datum may also be published in the data catalog on itself, thus without linking it to a definition and/or meta data. Differently formulated, the data catalog is configured to store datums and, in case, to link one or more datums to a definition and/or meta data.

A datum may further be annotated by a respective rule or a set of rules. A rule comprises, for example, for a datum, a visibility rule, a shareability rule, a changeability rule, an accessibility rule, and/or another rule that may be linked to the datum. The set of rules may be stored in the data catalog as well and may be associated with a datum.

Next, a second node may request access to the data catalog by means of the authorization process. The data catalog may also reject access by, for example, ignoring the second node or notifying that an access is declined. Yet, even if an access is granted, this does not imply that the second node has immediate access to any of the datums, or any other data stored in the data catalog.

In a subsequent step, the identification of the second node is compared with the set of rules, by, for example, the data catalog or an interface. A rule is, for example, related to a blockchain smart contract or a business logic which resolves a number of parameters thereby providing an answer to a business problem designed for it.

Since a datum may be associated with a rule or a set of rules, and by comparing or relating the identification of the second node with the set of rules, one or more datums annotated with a rule matching the identification are revealed to the second node. In other words, based on its identification, the second node may view a value or values of the datums that are revealed to him.

Thus, in summary, the data catalog, and more in particular the datums comprising it, may be consulted by a second node by requesting access. When access is granted, based on the identification of the second node, only those datums annotated with a rule matching the identification are revealed to the second node. This way, although the first node published a whole range of datums through the data set in the data catalog, only those which are required for the second node are revealed, while the other ones are concealed.

Different advantages are identified. Firstly, the first node must upload, publish, or link a data set only once to the data catalog. In other words, regardless with whom the first node, thereby representing a party, parties, or an entity, wants to collaborate, the data may already be published in the data catalog prior to any collaboration with another node. This way, the first node may already take appropriate actions prior to a collaboration, like for example preparing an order, thereby gaining time, which is valuable in a VCCP.

Secondly, the first node may upload a full data set comprising datums representing different classes of information, thus irrespective to another node with whom the data set will be shared.

Differently formulated, the first node may publish in the data catalog a complete data set comprising datums which are potentially all needed to perform the VCCP, or a part therefrom, in an efficient and optimal manner. Since the datums are individually annotated with a set of rules, a revealing may be restricted after the publishing in the data catalog has occurred, while on the other hand they may already be available when needed. This way, a risk of making errors by swapping and/or converting data between different sets, each related to another request or task within the VCCP is reduced as well.

Thirdly, any other party represented as a node, i.e. the second node, may request access to the data catalog. The first node does not have to take into account which type of data needs to be kept private for which other node, since it will only be revealed based on the identification of the second node. Moreover, if the second node would be of bad intention, access will be refused, and the node will be ignored.

Fourthly, a multitude of nodes may collaborate with each other, without having a need to establish a new connection each time a new collaboration arises. Per node only one connection may be sufficient, namely one with the data catalog for either publishing, either requesting access or a combination of both.

Fifthly, although the data catalog needs to be initially set up, a third party is not needed as an external independent party who mediates between the nodes that want to collaborate. By using a data catalog, which may, for example, running through cloud computing, datums may be kept secret to any one not having the proper access rights, thus also to, for example, a system supervisor who is responsible for maintaining and supporting the data catalog.

Sixthly, since the datums may be revealed to the second node based on its identification, a first node may conceal its own identification, when such data is not needed to perform the related task within the value chain collaboration process.

According to an example embodiment, the revealing further comprises revealing to the second node an identification of the first node.

Alternatively, the first node has the option to reveal its identification to the second node. This option may, for example, be carried out by publishing a datum comprising the identification of the first node and annotated with a rule such that the identification of the first node is revealed to the second node when the rule matches the identification of the second node. This way, the second node may be informed to which other node one or more datums are related. Advantageously, this way the first node may monitor to whom its identification is revealed, and whom it is concealed.

According to an example embodiment, the computer-implemented method further comprises the step of deriving the set of rules based on respective datums.

Thus, instead of annotating datum by a set of rules by the first node, complementary or alternatively, rules may be derived from a value or values of the datums. Thus, when publishing datums in the data catalog, rules may be derived for the datums or a part therefrom, by inspecting the values, the related meta data and/or or given definitions.

A first advantage is that the first node may gain time, and thus publish more efficiently a data set, since he does not have to annotate himself datums with rules. Secondly, a risk of making errors through annotating datums with incorrect rules is reduced, thereby enhancing the overall quality of the published data set.

According to an example embodiment, the computer-implemented method further comprises the step of receiving by the first node the data set from a child node.

In other words, the first node receives from the child node the data set, and the first node publishes the data set in the data catalog. Therefore, the child node will not intervene with the publishing and thus with the data catalog. The first node may thus cooperate with other nodes, thus a child node, without the need that the child node also publishes a data set in the data catalog. This way, the first node may conceal the identity of the child node and act on behalf of the child node, that is simulate as if he is the child node and simultaneously providing the functionalities of the computer-implemented method to the child node, while at the same time the second node is unaware of the existing of this child node.

According to an example embodiment, the revealing further comprises revealing to the second node an identification of the child node.

Alternatively, the first node may decide that it is acceptable to reveal the identification of the child node to the second node. An identification may then be published through a datum comprising the identification of the child node and annotated with a rule matching an identification of the second node. Through this option, the first node may notify the second node that a collaboration is set up with two other nodes, thus himself and the child node, and that the first node will, for example, take responsibility for the child node and his related actions.

According to an example embodiment, the computer-implemented method further comprises the step of making a datum immutable based on the identification of the second node.

Thus, simultaneously with the revealing of datums to the second node, datum may be made immutable for the second node. In other words, the second node may not make changes to one or more datums. This way, the first node maintains control over his datums.

According to an example embodiment, the revealing further comprises revealing to the second node grouped datums annotated with a rule matching the identification of the second node.

Thus, besides, for example, revealing datums sequentially or all at once, datums may be grouped based on the identification of the second node. The grouping may, for example, be done per request, per good, and/or per service. This way, for the second node an overview of the datums revealed to him is enhanced, and he may, for example, transform the grouped datums into a document suitable for further processing in an efficient way.

According to an example embodiment, the computer-implemented method further comprises the step of when the second node requests access to the data catalog notifying to the first node the identification of the second node.

The first node will thus actively be informed or notified that another node, i.e. the second node, requests access to the data catalog. Advantageously, the first node will thus be aware that one or more datums belonging to him may be revealed to another node, or that at least another node wants to have a look at them.

According to a second aspect, the disclosure relates to a collaboration platform comprising two or more nodes to share data in a VCCP through a method according to the first aspect.

The collaboration platform thus comprises the data catalog and a number of interfaces through which different nodes may interact and communicate with the data catalog. This way, a multitude of nodes may collaborate or cooperate in a VCCP through the platform.

According to a third aspect, the disclosure relates to a data processing apparatus comprising means for carrying out the method according to the first aspect.

According to a fourth aspect, the disclosure relates to a computer program comprising instructions which, when the program is executed by a computer, cause the computer to carry out the method according to the first aspect.

According to a fifth aspect, the disclosure relates to a computer-readable data carrier having stored thereon the computer program of the fourth aspect.

### Brief Description of the Drawings

Fig. 1 illustrates an uncoordinated value chain process comprising a variety of different parties; and
Fig. 2 illustrates a coordinated value chain process comprising dedicated parties performing logistic processes; and
Fig. 3 illustrates a value chain collaboration process comprising a data catalog according to an embodiment of the invention; and
Fig. 4 illustrates a publishing and revealing step of a data set comprising datums in the data catalog according to an embodiment of the invention; and
Fig. 5 illustrates steps performed for sharing data in a value chain collaboration process according to an embodiment of the invention; and
Fig. 6 illustrates a data catalog comprising an input and output interface and a processor according to an embodiment of the invention; and
Fig. 7 illustrates a computer system that can be configured to execute one or more embodiments for sharing data between nodes in a value chain collaboration process; and
Fig. 8 illustrates a cloud-interface to execute one or more embodiments of the method for sharing data between nodes a value chain collaboration process.

### Detailed Description of Embodiment(s)

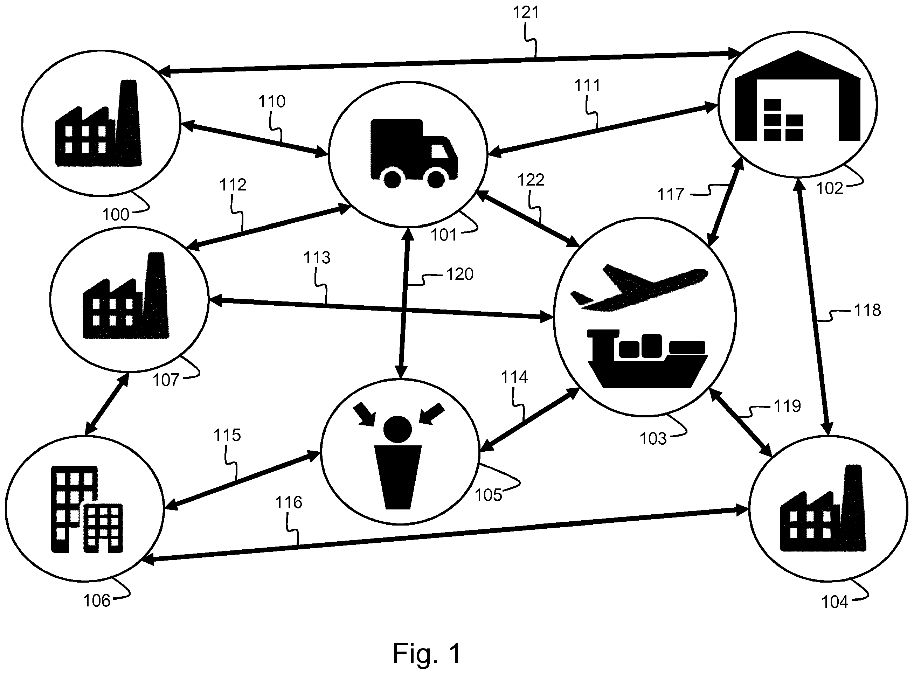

Fig. 1 illustrates an uncoordinated value chain process comprising a variety of different parties. The illustrated parties 100-107 are, for example, factories 100, 104, 107 where, for example, end products are fabricated, or raw materials are transformed and/or extracted, a carrier 101, a warehouse 102, a shipping-agent 103 utilizing planes and/or boats and/or any other means of transportation, offices 106, and an end-customer 105. Other parties, also labelled as nodes, involved in a value chain process may be present as well.

Generally, the parties 100-107 are located on different and separated locations spread worldwide. The end-user or end-customer 105 may, for example, be located in New York, the warehouse 102 in Shanghai, and the office 106 in Paris.

If the end-customer 105 would like, for example, to order a product through the office 106, whereby the product is located in the warehouse 102, he 105 first has to contact 115 the office 106, which on its behalf may, for example contact 116 factory 104 which informs 118 at the warehouse 102 if the product is still available. Next, the product may be transported by a carrier 101 contacted through link 111, via the shipping-agent 103 via link 122, to finally end at the end-customer 105.

In a configuration as illustrated in Fig. 1 the different nodes 100-107 may interact with each other every time a value chain is set up. This leads to a variety of communication and/or transmitting links, such as 110-122, whereby data, goods and/or services may be exchanged between the nodes 100-107. This, however, leads to a very complex network of interconnected 110-122 nodes 100-107 sharing data and exchanging physical goods and/or services, wherein, besides having lack of any overview, shared data may be out of control of the node that owns it.

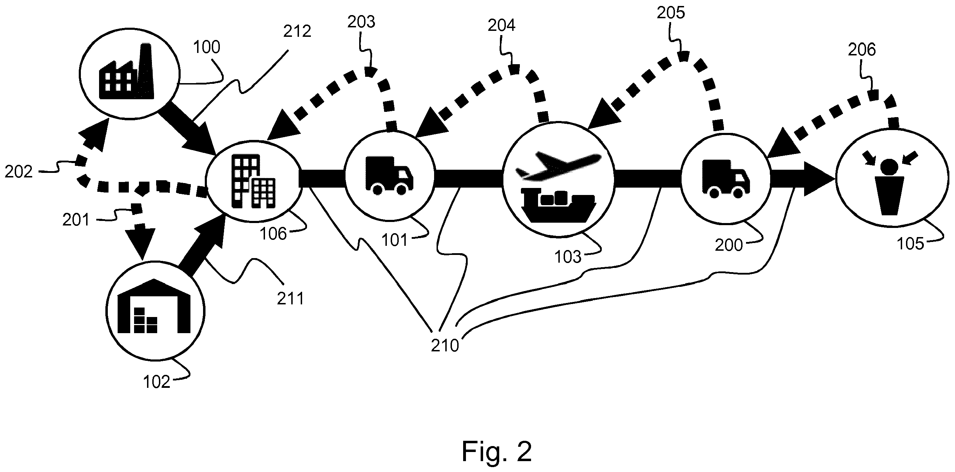

In a second configuration, the chain between an end-customer 105 and an office 106 may, for example, comprise only dedicated parties relaying in business agreements. Such a chain is illustrated in Fig. 2. In this illustrative example, the office 106 may directly contact a warehouse 102 through communication link 201 to place an order and deliver through link 211. Moreover, when the product is not available at the warehouse 102, the office 106 may directly order the product at a factory 202 where it is fabricated via communication link 202 and receive the product through transmitting link 212. Next, through carrier 101, shipping agent 103 and another carrier 200 handling the last mile the product is delivered to the end-customer 105 through chain 210. In the opposite direction, the end-customer 105 may communicate through communication links 203-204 to notify the office 106 that the product is delivered in a proper and timely manner. Yet, the end-customer 105 is, in this way, forced to share personal data with all the parties 101, 103, and 200 involved in the chain 210. Furthermore, the static chain 210 doesn't allow to involve other parties, such as for example another carrier or shipping agent that may perform a part of the chain 210 in a more efficient manner.

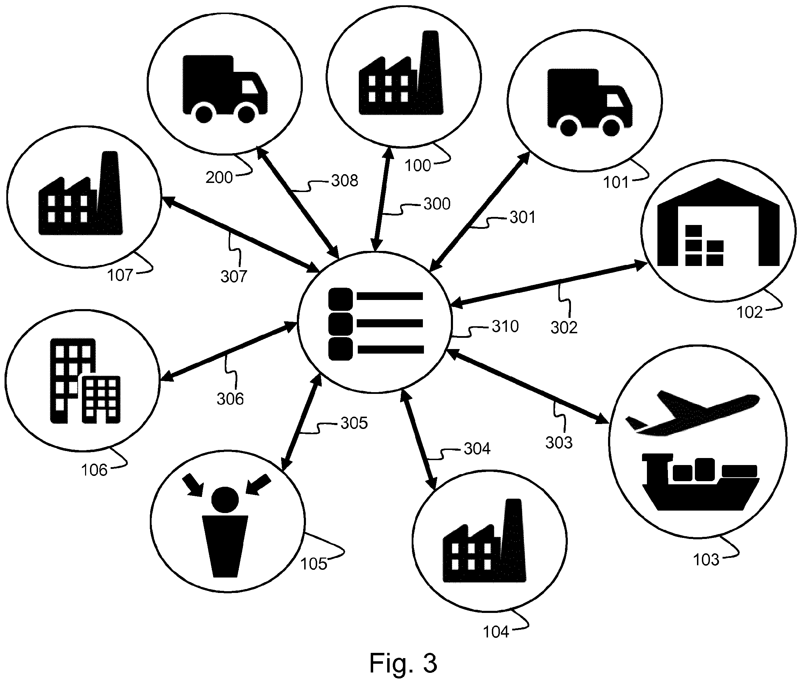

Instead of a static chain such as chain 210, the value chain process may also be performed through a value chain collaboration process (VCCP) comprising a data catalog as illustrated in Fig. 3. In the illustrative embodiment of the invention of Fig. 3, each of the parties 100-107 and 200 communicates with the data catalog 310 instead of individually communicating with each other by, for example, links 110-122 or links 201-206. Each party or node 100-107, 200 communicates with the data catalog 310 through a dedicated link 300-308.

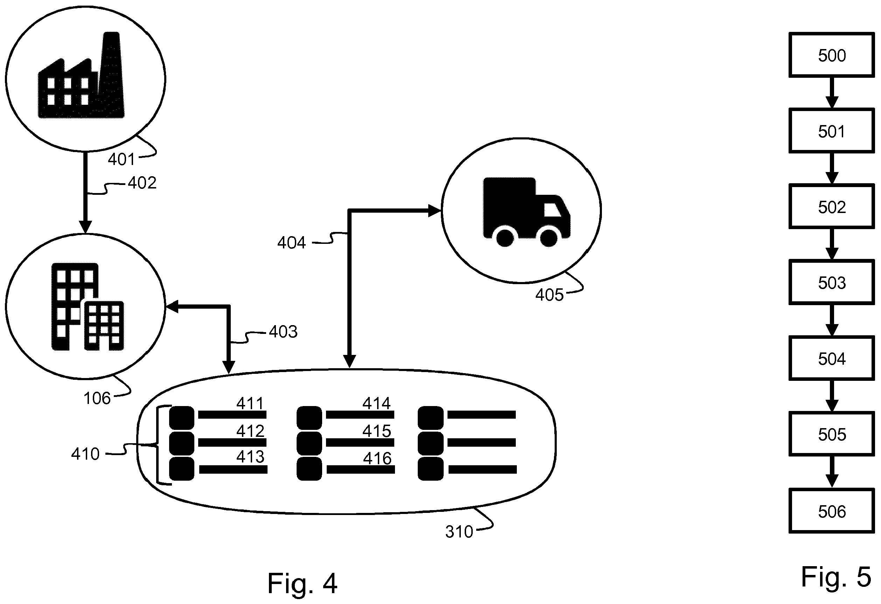

Since in the set-up illustrated in Fig. 3 the nodes 100-107, 200 communicate with the data catalog 310 each through a dedicated link 300-308, initially they are unaware of the presence of other nodes that may or are willing to participate in the VCCP. Nevertheless, through the data catalog 310 a VCCP may be set up between the different nodes 100-107, 200 or a part thereof. The steps for realizing such a collaboration are illustrated in Fig. 4 and Fig. 5.

In the illustrative embodiment of Fig. 4 further illustrated by the steps in Fig. 5, the office 106 seeks for a collaboration with a carrier to transport a product from a first location to a second location. The first location is, for example, the address of the office 106 or another address given by the office 106, and the second location is an address wherein the shipping agent 103 receives goods.

In a first step, the office 106 request 500 access to the data catalog 310, wherein access to the data catalog 310 is granted through an authorization process. The authorization process registers the identify of the office 106 to the data catalog 310. The identify of the office 106 comprises, for example, an identification number, a name and/or any other parameters suitable to identify the office 106.

Next, when access is granted to the data catalog 310, the office 106 publishes 501 in the data catalog 310 a data set 410 through link 403. The data set 410 comprises datums 411-416, which, for example, represent the product 411, the dimensions of a box wherein the product will be shipped 412, and the first and second locations 413. Other datums may be an identification of the end-customer 105 as datum 414 and a billing address 415, and an identification of the office 106 as datum 416. The data set 410 may thus comprise all datums 411-416 potentially needed to deliver the product to the end-customer 105.

The data set 410 and each of the datums 411-416 may be annotated with a respective rule or set of rules. For example, since the office 106 seeks for a collaboration with a carrier, the dimensions of the box 412 may be annotated by a rule that this datum 412 and related ones, such as the locations 413 may only become visible to a carrier that is able to transport a box of these dimensions. When the collaboration relates to a transportation of a part of the chain, for example from the office 106 to the shipping agent 103, other datums, such an identification 414 of the end-customer 105 is annotated with a rule that it remains hidden in this stage of the VCCP.

Next, a second node, in case the carrier 405 likewise requests 502 access to the data catalog 310 via link 404 through an authorization process. The data catalog 310 then identifies 503 the carrier 405 through an identification thereof and compares it with an identification rule. When, for example, another node such as a warehouse 102 requests 502 access, this is denied since in this stage of the VCCP only carriers may be granted 505 access. An identification rule may, for example, be based on a blockchain smart contract wherein it is specified if a carrier has the capability, proper skills and level of trust to perform any operation whatsoever to grant 505 access to the data catalog 310.

Further, when the carrier 405 is identified 503 and his identification matches 504 a rule to grant 505 access, the access is granted 505 to the data catalog 310 without, initially, revealing 506 any datums 411-416 to the carrier 405.

Subsequently, datums annotated with a rule matching the identification of the carrier 405 are revealed 506. For example, if the carrier 405 can transport a box of certain dimensions between the two locations, the datums 412 and 413 are revealed 506 to him 405. Since the other datums 411, 414-416 are not needed to perform the transportation, these datums 411, 414-416 are annotated with a rule such that they remain hidden to the carrier 405 in this stage of the VCCP. Moreover, since the identification of the office 106 may also be considered as redundant, this may also be kept secret, and only an address of collecting through datum 413 is communicated. Reversibly, the identification of the carrier 405 may also be kept secret to the office 106, such that the office 106 is only aware that a carrier will perform the operation, regardless of his identification. As a result, the office 106 and the carrier 405 may collaborate with each other through the data catalog 310 without being acquainted with each other.

Alternatively, if desired by the office 106, in the illustrative embodiment of Fig. 4, the identification of the office 106 may be revealed to the carrier 405 if the office 106 itself either publish 501 its identification in the data catalog 310 as a datum 416 annotated with a rule matching 504 the identification of the carrier 405, either by the communication links 403 and 404 through which the identification is exchanged.

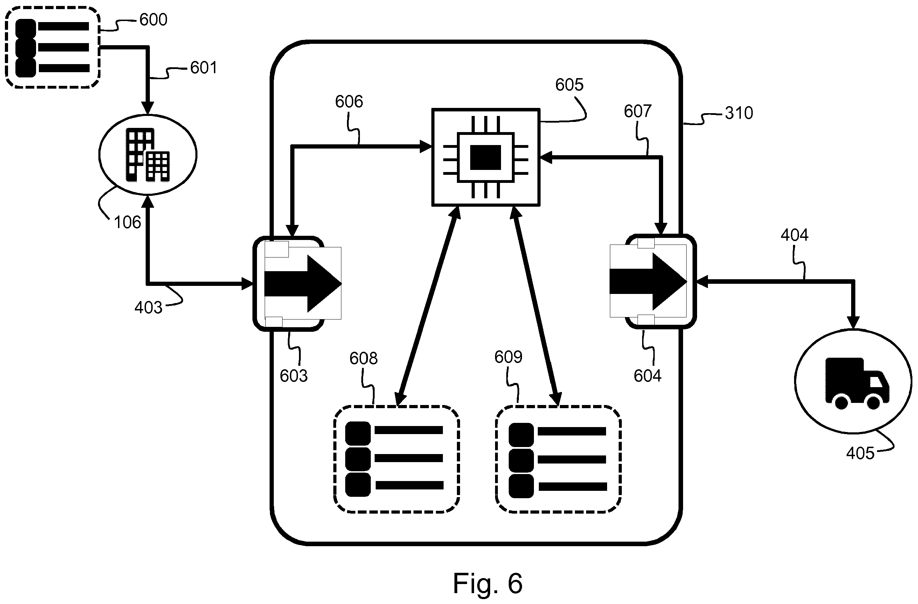

The set of rules annotating the datums 411-416 may also be derived based on the datums 411-416 itself. For example, as illustrated in Fig. 6, when publishing 501 the datums 411-416 in the data catalog 310 through link 403, the data catalog 310 receives the datums 411-416 via input interface 603 and transfers them to a processor 605 via link 606. Next, the processor 605 inspects the datums 411-416 and derives that they relate to a transportation stage in the VCCP from a first to a second location. From this, datums 412 and 413 are annotated as revealable 608 to a carrier able to perform the transportation stage, while the other datums 411 and 414-416 are set non-revealable 609. Next, the reveable datums 608 may be transferred through link 607 and output interface 604 to the carrier 405. The deriving of the set of rules may also be based on the identification of the office 106. The processor 605, for example, is aware that the office 106 seeks a carrier 405, such that the deriving is based on this observation.

In the illustrative embodiment of Fig. 4, the office 106 may also publish datums in the data catalog 310 through a child node, for example factory 401. The office 106 receives from the factory 401 through link 402 a data set, and subsequently, the office 106 publishes 501 the received data set in the data catalog 310. The identification of the factory 401 may then either be kept secret to any other node, such as carrier 405 that accesses the data catalog 310 or may be revealed 506.

The processor 605 of the data catalog 310 is further configured to make datums immutable based on the identification of the node requesting access to the data catalog 310. As an illustrative example a carrier, such as carrier 200, being responsible for the last mile in the chain is considered as the node requesting access to the data catalog 310. Thus, the processor 605 identifies 503 the carrier 200 as a node requesting 502 access to the data catalog 310. Prior to any revealing 506 of datums to the carrier 200, some or all of the revealed datums are made immutable, such that the publishing node, in case the office 106, retains control over the datums, even if they are exchanged through the revealing 506 with the carrier 200. For example, in contrast to the carrier 405, the datum 414 comprising an identification of the end-customer 105 is revealed to the carrier 200. To protect the VCCP against fraud, for example by delivering the product to another end-customer, this datum 414 is made immutable by the data catalog 310, such that the publishing node, in case the office 106, retains control over it.

Revealed datum may also be grouped such that the requesting node receives the revealed datums in a group. For example, a carrier may request to reveal datums related to a predefined trajectory, for example, from the office 106 to the shipping agent 103 such that the requesting node receives all potential orders he may or is willing to handle.

A requesting node, for example node 405 as illustrated in Fig. 6, may be labelled as an accessible node to the data catalog 310 when his identification matches a sharing rule of the data catalog 310. This way, the identification step 504 may be skipped such that access is granted in a faster manner. The sharing rule may be based on a business agreement.

Finally, the publishing node, such as node 106 in Fig. 6, may actively be notified if a requesting node, such as node 405, requests access to the data catalog 310. This way, the publishing node 106 is aware that another node is requesting 502 to reveal 506 datums that the publishing node 106 had published 501.

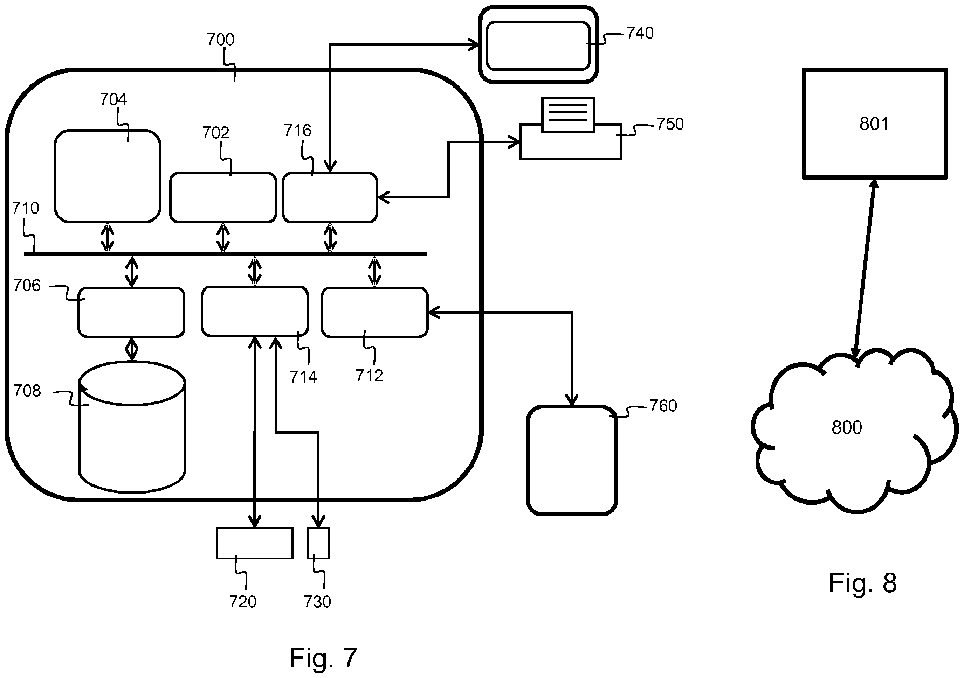

Fig. 7 shows a suitable computing system 700 for performing the steps according to the above embodiments. Computing system 700 may be used for sharing data in a VCCP. Computing system 700 may in general be formed as a suitable general-purpose computer and comprise a bus 710, a processor 702, a local memory 704, one or more optional input interfaces 714, one or more optional output interfaces 716, a communication interface 712, a storage element interface 706 and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator to input information to the computing device 700, such as a keyboard 720, a mouse 730, a pen, voice recognition and/or biometric mechanisms, etc. Output interface 716 may comprise one or more conventional mechanisms that output information to the operator, such as a display 740, etc. Communication interface 712 may comprise any transceiver-like mechanism such as for example one or more Ethernet interfaces that enables computing system 700 to communicate with other devices and/or systems 760. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage elements 708 above is described as a local disk, in general any other suitable computer-readable media such as a removable magnetic disk, optical storage media such as a CD or DVD, -ROM disk, solid state drives, flash memory cards, ... could be used. The system 700 described above can also run as a virtual machine above the physical hardware.

The steps according to the above embodiments may be performed on computing system 700. Computing system may interact directly with a user, e.g. through the interfaces 720, 730 and represent the results of the steps according to the above embodiments on a display 740 or print them on a printer 750. Alternatively, as illustrated in Fig. 8, the steps may be performed remotely by a user on a remote computing system 800, e.g. on a cloud computing system. Interaction with a user may then be done by a connection between the remote computing system 800 and a client computing system 801, e.g. over an Internet connection. Also, the client computing system 801 may be implemented as computing system 700. Communication is then performed over a wired or wireless networking interface 712.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer implemented method for sharing data between nodes (100-107) in a value chain collaboration process, the method comprising the steps of:
- requesting (500) access by a first node (106) to a data catalog (310); and
- publishing (501) in the data catalog (310) by the first node (106) a data set (410) comprising datums (411-416) annotated by a respective set of rules; and
when a second node (405) requests (502) access to the data catalog (310):
- revealing (506) to the second node (405) one or more datums (411-416) annotated with a rule matching (504) an identification of the second node (405).

2. The computer implemented method according to claim 1, wherein the revealing (506) further comprises revealing to the second node (405) an identification of the first node (106).

3. The computer implemented method according to any one of the preceding claims, further comprising the step of deriving the set of rules based on respective datums (411-416).

4. The computer implemented method according to claim 3, wherein the deriving of the set of rules is further based on the identity of the first node (106).

5. The computer implemented method according to any one of the preceding claims, further comprising the step of receiving by the first node (106) the data set from a child node (401).

6. The computer implemented method according to claim 5, wherein the revealing (506) further comprises revealing (506) to the second node (405) an identification of the child node (401).

7. The computer implemented method according to any one of the preceding claims, further comprising the step of making a datum immutable based on the identification of the second node (405).

8. The computer implemented method according to any one of the preceding claims, wherein the revealing (506) further comprises revealing (506) to the second node (405) grouped datums annotated with a rule matching the identity of the second node(405).

9. The computer implemented method according to any one of the preceding claims, the method further comprising the step of when the second node (405) requests access to the data catalog (310):
- notifying to the first node (106) the identification of the second node (405).

10. A collaboration platform comprising two or more nodes (100-107) configured to share data in a value chain collaboration process through a method according to any one of the claims 1 to 9.

11. A data processing apparatus comprising means for carrying out the method according to any one of the claims 1 to 9.

12. A computer program comprising instructions which, when the program is executed by a computer, cause the computer to carry out the method according to any one of the claims 1 to 9.

13. A computer-readable data carrier having stored thereon the computer program of claim 12.
